Europäisches Patentamt

European Patent Office

Office européen des brevets

(11) Publication number: **0 134 339**
**B1**

(12) **EUROPEAN PATENT SPECIFICATION**

(45) Date of publication of patent specification: **21.10.87**

(21) Application number: **83304791.3**

(22) Date of filing: **18.08.83**

(51) Int. Cl.⁴: **A 01 N 47/24** // (A01N47/24, 43:58)

(54) **Herbicidal composition.**

(43) Date of publication of application:
**20.03.85 Bulletin 85/12**

(45) Publication of the grant of the patent:
**21.10.87 Bulletin 87/43**

(84) Designated Contracting States:
**DE FR GB NL**

(56) References cited:

PESTICIDE MANUAL, 6th edition 1979, pages 21 and 322, edited by C.R. Worthing, published by The British Crop Protection Council, Croydon, GB.

(73) Proprietor: **JAPAN HYDRAZINE CO., LTD.**
1-1, 2-chome Uchisaiwai-cho
Chiyoda-ku Tokyo (JP)

(72) Inventor: **Tsuchiya, Hideji**
50-35, Kugayama 4-chome
Suginami-ku Tokyo (JP)
Inventor: **Takematsu, Tetsuo**
612, Mine-machi 3-chome
Utsunomiya-shi Tochigi-ken (JP)

(74) Representative: **Woodcraft, David Charles et al**
BROOKES & MARTIN High Holborn House 52/54
High Holborn
London, WC1V 6SE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**0 134 339**

**Description**

Background of the invention
(1) Field of the invention
The present invention relates to a herbicidal composition comprising as active ingredients sodium N-methoxycarbonylsulfanylamide and maleic hydrazide or a salt thereof.

(2) Description of the prior art
It is known that a herbicide comprising sodium N-methoxycarbonylsulfanylamide (hereinafter referred to as "Asulam Sodium") has a control effect of a broad spectrum to weeds of the rice family such as fingergrass, goose-grass, barnyard grass and annual bluegrass, annual weeds such as *Polygonum blumei meisner,* annual fleabane, dayflower, common chickweed, shovelweed and Japanese clover, perennial weeds such as bracken, culy dock, butterbur, common groundsel, needle-grass and hedge bindweed, and deciduous miscellaneous shrubs such as oak, chestnut and Japanese oak. However, this herbicide is insufficient in controlling the growth of the subterranean part (such as rhizome, tuber or bulb) of culy dock which brings about the most serious damage among perennial weeds often growing in a pasture or orchard, and therefore, the effect on old plants (3 to 5 years old) is poor though a sufficient effect is expected on young plants (1 to 2 years old). The herbicide is defective in that the effect is relatively insufficient in the actual application. Moreover, it is undesirable to apply this chemical in large amounts since it decomposes slowly in the soil and its residual amount in the soil is large.

Maleic hydrazide (hereinafter referred to as "MH") or its salt is widely used for controlling perennial weeds such as culy dock, butterbur, hedge bindweed, wormwood, common sorrel, Japanese knotweed, red garlic and dandelion. However, this herbicide is defective in that the herbicidal effect greatly differs according to the kinds of weeds. When MH or its salt is used in the growth period of perennial weeds, that is, in spring or summer, a highest effect is attained by a method in which a terrestrial stem or leaf portion is cut off after passage of about 7 to about 10 days from the time of the chemical treatment. Even if this method is adopted, it is necessary that the chemical should be applied at such a high rate as more than 50 g per a. Moreover, in order to control the growth of the subterranean part (such as rhizome, tuber or bulb), it is necessary to apply the chemical at a rate of at least 1,000 g per 10 ares. Accordingly, it is often difficult to obtain the intended controlling effect stably.

Summary of the invention
We made researches in view of eliminating the above disadvantages encountered in controlling perennial weeds, and as the result, we found that when Asulam Sodium and MH are used in combination, a very high synergistic effect can be attained. We have now completed the present invention based on this finding.

More specifically, in accordance with the present invention, there is provided a herbicidal composition comprising as active ingredients sodium N-methoxycarbonylsulfanylamide and maleic hydrazide or a salt thereof.

Detailed description of the invention
In the present invention, by the term "maleic hydrazide or a salt thereof" are meant maleic hydrazide, choline maleic hydrazide, diethanolamine maleic hydrazide, sodium maleic hydrazide and potassium maleic hydrazide.

The herbicidal composition of the present invention can completely control perennial weeds often growing in an orchard, a pasture, a forest or other non-cultivated ground such as culy dock, bracken, common sorrel, horsenettle and kudzu, and shrubs (perennial tree weeds) such as rosebay, oak (*Quercus serrata*), white alder, spicebush and brambles. Furthermore, annual weeds and small perennial weeds such as wormwood, red garlic, hedge bindweed, nut grass, yellow cress, Yabugarashi (*Cayratio japonica*) and jishibari (*Ixeris debilis*) can be controlled by the herbicidal composition of the present invention.

The amount of Asulam Sodium contained in the herbicidal composition of the present invention is ordinarily 2 to 30 g per a and preferably 5 to 25 g per a. If the amount applied of Asulam Sodium is smaller than 2 g per a, the herbicidal effect is insufficient, and if the amount applied of Asulam Sodium exceeds 30 g per a, the treatment is economically disadvantageous and the amount of the chemical left in soil is increased. When the herbicidal composition of the present invention is applied to well-grown weeds, it is preferred that a larger chemical amount be selected within the above-mentioned range.

The amount of MH or its salt contained in the applied herbicidal composition of the present invention is ordinarily 5 to 50 g per a and preferably 10 to 25 g per a as maleic hydrazide.

The ratio between Asulam Sodium and MH in the herbicidal composition of the present invention can optionally be chosen within such a range that the application rate of Asulam Sodium is 2 to 30 g per a and the application rate of MH or its salt is 5 to 50 g per a. If both the ingredients are mixed at such a ratio, a herbicidal composition having an excellent herbicidal effect can be obtained. Thus, the herbicidal compositions in accordance with the invention preferably contain 20 to 300 parts by weight of sodium N-methoxycarbonylsulfanylamide and 50 to 500 parts by weight of maleic hydrazide or its salt.

2

## 0 134 339

In the present invention, choline maleic hydrazide is especially excellent in the effect among salts of maleic hydrazide, and diethanolamine maleic hydrazide comes next.

The herbicidable composition of the present invention is ordinarily formulated into a liquid or powder preparation. Diatomaceous earth or talc is used as the carrier when a powder preparation or dust is formed. When a liquid preparation is formed, in order to improve the permeability and spreading property, it is preferred that an adjuvant be incorporated into the herbicidal composition. Of course, the adjuvant may be added to the herbicidal composition when it is actually used. From the viewpoint of the effect, a liquid preparation is preferred. From the viewpoints of the homogenization of the chemicals and the enhancement of the herbicidal effect, it is preferred that the unit amount per a of the herbicidal composition be diluted with about 10 l of water when the herbicidal composition of the present invention is applied.

When the herbicidal composition of the present invention is used, a very excellent herbicidal effect can be obtained very promptly with a much smaller amount than the amount of the chemical when Asulam Sodium or MH or its salt is used singly.

The process for preparing the herbicidal composition of the present invention will now be described with reference to the following Examples.

### Example 1

28 Parts by weight of an aqueous solution of Asulam Sodium (containing 37% by weight of Asulam Sodium) was incorporated and mixed into 68 parts by weight of an aqueous solution of choline maleic hydrazide (containing 30% by weight of maleic hydrazide), and 4 parts by weight of a surface active agent (1:1 mixture of polyoxyethylene oleyl ether and laurylsulphate triethanolamine) was added to the mixture to obtain a product which contained 39 parts by weight of choline maleic hydrazide (20 parts by weight as maleic hydrazide) and 10 parts by weight of Asulam Sodium.

### Example 2

28 Parts by weight of an aqueous solutoin of Asulam Sodium (containing 37% by weight of Asulam Sodium) was incorporated and mixed into 68 parts by weight of an aqueous solution of diethanolamine maleic hydrazide (containing 30% by weight of maleic hydrazide), and 4 parts by weight of a surface active agent (1:1 mixture of polyoxyethylene oleyl ether and dioctyl sulfosuccinate) was added to the mixture to obtain a product which contained 39 parts by weight of diethanolamine maleic hydrazide (20 parts by weight as maleic hydrazide) and 10 parts by weight of Asulam Sodium.

### Example 3

15 Parts by weight of an aqueous solution of Asulam Sodium (containing 37% by weight of Asulam Sodium) was incorporated and mixed into 50 parts by weight of an aqueous solution of potassium maleic hydrazide (containing 20% by weight of maleic hydrazide), and 5 parts by weight of a surface active agent (1:1 mixture of polyoxyethylene oleyl ether and dioctyl sulfosuccinate) and 29 parts by weight of water were added to the mixture to obtain a product which contained 12 parts by weight of potassium maleic hydrazide (10 parts by weight as maleic hydrazide), 5 parts by weight Asulam Sodium and 5 parts by weight of the surface active agent with the balance being water.

### Example 4

To 100 parts by weight of calcium carbonate (having a size of 48 to 150 mesh and a purity higher than 90%) were added 4 parts by weight of an aqueous solution of choline maleic hydrazide (containing 30% by weight of maleic hydrazide), 3 parts by weight of an aqueous solution of Asulam Sodium (containing 37% by weight of Asulam Sodium) and 0.1 part by weight of a surface active agent (comprising 0.5 part by weight of polyoxyethylene dodecyl ether and 0.05 part by weight of dioctyl sulfosuccinate), and the mixture was heated and water was sufficiently evaporated to obtain a product.

The herbicidal effect of the herbicidal composition will now be described with reference to the following tests.

### Test 1

In order to confirm the herbicidal effect, edible millet (rice family) and radish (broad-leaved plant) were cultivated as indicator plants in an infant plant tester, and an aqueous solution of choline MH, an aqueous solution of Asulam Sodium or an aqueous solution of a mixture of both the chemicals was uniformly sprayed to the plants at a rate of 10 l per a at the growth period of the 4.5-leaf stage of edible millet and 4-leaf stage of radish. The results of the investigation made 1 month after the spray treatment are shown in Table 1.

**0 134 339**

TABLE 1

| Amounts (g/10 a) of chemicals | Damage degree | |
| --- | --- | --- |
| | edible millet | radish |
| choline MH, 16 | 1 | 1 |
| choline MH, 31.3 | 2 | 2 |
| choline MH, 62.5 | 2 | 2 |
| choline MH, 125 | 3 | 3 |
| choline MH, 250 | 4 | 3 |
| Asulam Sodium, 16 | 0 | 0 |
| Asulam Sodium, 31.3 | 0 | 1.5 |
| Asulam Sodium, 62.5 | 1.5 | 2 |
| Asulam Sodium, 125 | 3.5 | 3.5 |
| Asulam Sodium, 250 | 5 | 5 |
| Asulam Sodium, 16+choline MH, 16 | 1 | 1 |
| Asulam Sodium, 16+choline MH, 31.3 | 2 | 2 |
| Asulam Sodium, 16+choline MH, 62.5 | 3 | 2 |
| Asulam Sodium, 16+choline MH, 125 | 4 | 3 |
| Asulam Sodium, 16+choline MH, 250 | 4 | 4 |
| Asulam Sodium, 31.3+choline MH, 16 | 1.5 | 2 |
| Asulam Sodium, 31.3+choline MH, 31.3 | 2.5 | 2.5 |
| Asulam Sodium, 31.3+choline MH, 62.5 | 4 | 3 |
| Asulam Sodium, 31.3+choline MH, 125 | 5 | 5 |
| Asulam Sodium, 31.3+choline MH, 250 | 5 | 5 |
| Asulam Sodium, 62.5+choline MH, 16 | 2 | 2.5 |
| Asulam Sodium, 62.5+choline MH, 31.3 | 4 | 3 |
| Asulam Sodium, 62.5+choline MH, 62.5 | 5 | 5 |
| Asulam Sodium, 62.5+choline MH, 125 | 5 | 5 |
| Asulam Sodium, 62.5+choline MH, 250 | 5 | 5 |
| Asulam Sodium, 125+choline MH, 16 | 5 | 5 |
| Asulam Sodium, 125+choline MH, 31.3 | 5 | 5 |
| Asulam Sodium, 125+choline MH, 62.5 | 5 | 5 |
| Asulam Sodium, 125+choline MH, 125 | 5 | 5 |
| Asulam Sodium, 125+choline MH, 250 | 5 | 5 |

4

**0 134 339**

TABLE 1 (continued)

| Amounts (g/10 a) of chemicals | Damage degree | |
| --- | --- | --- |
| | edible millet | radish |
| Asulam Sodium, 250+choline MH, 16 | 5 | 5 |
| Asulam Sodium, 250+choline MH, 31.3 | 5 | 5 |
| Asulam Sodium, 250+choline MH, 62.5 | 5 | 5 |
| Asulam Sodium, 250+choline MH, 125 | 5 | 5 |
| Asulam Sodium, 250+choline MH, 250 | 5 | 5 |

The damage degree was evaluated according to the following rating.
   0: harmless to indicator plants and healthy growth of indicator plants
   1: 20 % of indicator plants withered
   1.5: 30 % of indicator plants withered
   2: 40 % of indicator plants withered
   2.5: 50 % of indicator plants withered
   3: 60 % of indicator plants withered
   3.5: 70 % of indicator plants withered
   4: 80 % of indicator plants withered
   4.5: 90 % of indicator plants withered
   5: indicator plants completely withered

Incidentally, "%" in the above description indicates the percentile ratio of the area where the indicator plant withered to the test area where the spray treatment was carried out. The same will apply hereinafter.

Test 2
A concrete pot having an area of 0.5 m×0.5 m was filled with field soil; and perennial weeds described below were transplanted in the pot at the beginning of April, and an aqueous solution of choline MH, an aqueous solution of Asulam Sodium or an aqueous solution of a mixture of choline MH and Asulam Sodium was sprayed at a rate of 10 l per a. The results of investigation made 45 days after the spray treatment are shown in Table 2.

TABLE 2

| Amounts (g/10 a) of chemicals | | Damage degree | | |
| --- | --- | --- | --- | --- |
| | Culy dock | Common sorrel | Wormweed | Red garlic |
| choline MH, 62.5 | 2 | 1 | 1 | 2 |
| choline MH, 125 | 3 | 2.5 | 2.5 | 3.5 |
| choline MH, 250 | 4.5—5 | 2.5 | 3.5—4 | 5 |
| choline MH, 500 | 4.5—5 | 4.5 | 4.5—5 | 5 |
| choline MH, 1000 | 4.5—5 | 4.5—5 | 4.5—5 | 5 |
| Asulam Sodium, 31.3 | 1 | 1 | 1 | 0 |
| Asulam Sodium, 62.5 | 3.5—4 | 2.5 | 1.5 | 1 |
| Asulam Sodium, 125 | 4.5—5 | 3.5 | 2—2.5 | 5 |
| Asulam Sodium, 250 | 4.5—5 | 3.5—4 | 3.5 | 5 |
| Asulam Sodium, 500 | 5 | 4.5—5 | 3.5—4 | 5 |
| Asulam Sodium, 31.3+choline MH, 62.5 | 3.5 | 2 | 2 | 3 |

5

TABLE 2 (continued)

| Amounts (g/10 a) of chemicals | Culy dock | Damage degree Common sorrel | Wormweed | Red garlic |
|---|---|---|---|---|
| Asulam Sodium, 31.3+choline MH, 125 | 3.5 | 3 | 3 | 3.5 |
| Asulam Sodium, 31.3+choline MH, 250 | 4.5—5 | 3.5 | 3.5 | 5 |
| Asulam Sodium, 31.3+choline MH, 500 | 4.5—5 | 4.5 | 4.5—5 | 5 |
| Asulam Sodium, 31.3+choline MH, 1000 | 5 | 4.5—5 | 5 | 5 |
| Asulam Sodium, 62.5+choline MH, 62.5 | 4 | 3 | 2.5 | 3 |
| Asulam Sodium, 62.5+choline MH, 125 | 4 | 4 | 4 | 4 |
| Asulam Sodium, 62.5+choline MH, 250 | 4.5—5 | 4.5 | 5 | 5 |
| Asulam Sodium, 62.5+choline MH, 500 | 4.5—5 | 4.5—5 | 4.5—5 | 5 |
| Asulam Sodium, 62.5+choline MH, 1000 | 4.5—5 | 5 | 5 | 5 |
| Asulam Sodium, 125+choline MH, 62.5 | 4.5—5 | 4 | 3 | 5 |
| Asulam Sodium, 125+choline MH, 125 | 4.5—5 | 4 | 4 | 5 |
| Asulam Sodium, 125+choline MH, 250 | 4.5—5 | 4.5—5 | 4.5—5 | 5 |
| Asulam Sodium, 125+choline MH, 500 | 4.5—5 | 4.5—5 | 4.5—5 | 5 |
| Asulam Sodium, 125+choline MH, 1000 | 4.5—5. | 5 | 5 | 5 |
| Asulam Sodium, 250+choline MH, 62.5 | 5 | 4 | 4 | 5 |
| Asulam Sodium, 250+choline MH, 125 | 5 | 4 | 4 | 5 |
| Asulam Sodium, 250+choline MH, 250 | 5 | 4.5—5 | 4.5—5 | 5 |
| Asulam Sodium, 250+choline MH, 500 | 5 | 4.5—5 | 4.5—5 | 5 |
| Asulam Sodium, 250+choline MH, 1000 | 5 | 5 | 5 | 5 |
| Asulam Sodium, 500+choline MH, 62.5 | 5 | 4.5—5 | 4 | 5 |
| Asulam Sodium, 500+choline MH, 125 | 5 | 4.5—5 | 4.5—5 | 5 |
| Asulam Sodium, 500+choline MH, 250 | 5 | 5 | 5 | 5 |
| Asulam Sodium, 500+choline MH, 500 | 5 | 5 | 5 | 5 |
| Asulam Sodium, 500+choline MH, 1000 | 5 | 5 | 5 | 5 |

The damage degree was evaluated according to the following rating.

0: harmless to weeds and healthy growth of weeds
1: 20 % of weeds withered
1.5: 30 % of weeds withered
2: 40 % of weeds withered
2.5: 50 % of weeds withered
3: 60 % of weeds withered
3.5: 70 % of weeds withered
4: 80 % of weeds withered
4.5: 90 % of weeds withered
5: weeds completely withered

Test 3

The results of the test of controlling the growth of subterranean parts of perennial plants (weeds) are described.

The every year appearance of a perennial weed is due to nutriments stored in the subterranean part. Accordingly, in order to exterminate perennial weeds, it is necessary to control the growth of the subterranean parts, and this is a most important requirement for controlling perennial weeds. In order to confirm this action, the herbicidal composition of the present invention was tested by using potato as the indicator plant (perennial weed) in the following manner.

Tubers of potato were soil-cultivated in a pot having an area of

$$10 \times \frac{1}{88,500} \ a,$$

and when the grass height became 20 cm, a mixed chemical of choline MH and Asulam Sodium (shown in Table 3) was sprayed to all the stems and leaves. When 40 days had passed from the time of the spray treatment, the grass height became 50 cm. At this time, new tubers were dug out and examined. The obtained results are shown in Table 3.

TABLE 3

| Amounts (g/10 ares) of chemicals | | Weight (g/stem) of potato tubers |
|---|---|---|
| Choline MH | Asulam Sodium | |
| 0 | 0 | 200 |
| 125 | 0 | 210 |
| 125 | 62.5 | 170 |
| 125 | 125 | 160 |
| 125 | 250 | 50 |
| 250 | 0 | 180 |
| 250 | 62.5 | 150 |
| 250 | 125 | 130 |
| 250 | 250 | 40 |
| 500 | 0 | 200 |
| 500 | 62.5 | 130 |
| 500 | 125 | 40 |
| 500 | 250 | 8 |

Test 4

On October 10, herbicides were applied singly or in combination, as indicated in Table 4, to an afforested land of cedar and cypress of the fourth cultivation year where miscellaneous shrubs such as oak, chestnut, oak (*Quercus serrata*), white alder, spicebush, brambles and rosebag grew thick. The investigation was made on June 10, the next year. The obtained results are shown in Table 4. The growth-controlling effect was evaluated according to the following rating.

5: complete control, weeding not necessary in that year

4: substantially complete control, but some resistant miscellaneous plants found, weeding not necessary in that year

3: most miscellaneous plants damaged but sprouting observed in considerable miscellaneous plants and budding found in some withered stems, weeding necessary more or less

2: controlling effect obvious but weeding necessary

1: certain controlling effect, but weeding necessary because of considerable regrowth

O: no substantial difference from control area

7

## TABLE 4

| Amounts (g/10 ares) of chemicals | Damage on cultivated trees | | Damage degree | | | | | | |
| | Cedar | Cypress | Oak | Chestnut | Oak (Quercus serrata) | White alder | Spicebush | Brambles | Rosebag |
|---|---|---|---|---|---|---|---|---|---|
| choline MH, 250 | 0 | 0 | 1 | 1 | 1 | 1 | 0 | 2 | 1 |
| choline MH, 500 | 0 | 0 | 2 | 2 | 2 | 3 | 1 | 3 | 2 |
| choline MH, 1000 | 1 | 0 | 3 | 5 | 5 | 5 | 3 | 4.5 | 3.5 |
| Asulam Sodium, 125 | 0 | 0 | 0 | 0 | 0 | 0 | 0 | 0 | 0 |
| Asulam Sodium, 250 | 0 | 0 | 0 | 0 | 0 | 0 | 0 | 1 | 1 |
| Asulam Sodium, 500 | 0 | 0 | 2 | 2 | 2 | 1 | 0 | 2 | 2 |
| Asulam Sodium, 125+choline MH, 250 | 0 | 0 | 4 | 3 | 3.5 | 3 | 1 | 3 | 2 |
| Asulam Sodium, 125+choline MH, 500 | 0 | 0 | 5 | 4.5 | 5 | 4.5 | 2 | 4 | 3 |
| Asulam Sodium, 125+choline MH, 1000 | 2 | 0 | 5 | 5 | 5 | 5 | 3 | 4 | 4 |
| Asulam Sodium, 250+choline MH, 250 | 0 | 0 | 4.5 | 4.5 | 5 | 4 | 2 | 4 | 3.5 |
| Asulam Sodium, 250+choline MH, 500 | 0 | 0 | 5 | 5 | 5 | 5 | 3 | 5 | 4 |
| Asulam Sodium, 250+choline MH, 1000 | 2 | 0 | 5 | 5 | 5 | 5 | 5 | 5 | 5 |
| Asulam Sodium, 500+choline MH, 250 | 0 | 0 | 5 | 5 | 5 | 4.5 | 3 | 5 | 4.5 |
| Asulam Sodium, 500+choline MH, 500 | 0 | 0 | 5 | 5 | 5 | 5 | 4.5 | 5 | 5 |
| Asulam Sodium, 500+choline MH, 1000 | 2 | 0 | 5 | 5 | 5 | 5 | 5 | 5 | 5 |

Test 5

Test areas were formed in a stock farm where bracken, butterbur, kudzu, knotweed, yabugarashi (*Cayratio japonica*) and dandelion grew thick, and herbicides were applied singly or in combination, as indicated in Table 5, on June 20. The investigation was made on August 20 and the controlling effect was evaluated according to the following rating. The obtained results are shown in Table 5.

5: terrestrial part completely withered and no regrowth of killed weeds
4.5: 90 % of terrestrial part withered and no regrowth of killed weeds
4: 80 % of terrestrial part withered and no regrowth of killed weeds
3.5: 70 % of terrestrial part withered and no regrowth of killed weeds
3: 60 % of terrestrial part withered and no regrowth of killed weeds
2.5: 50 % of terrestrial part withered and no regrowth of killed weeds
2: 40 % of terrestrial part withered and no regrowth of killed weeds
1.5: 30 % of terrestrial part withered and no regrowth of killed weeds
1: 20 % of terrestrial part withered and no regrowth of killed weeds
0.5: 10 % of terrestrial part withered and no regrowth of killed weeds
0: no harm to weeds and healthy growth of weeds

TABLE 5

| Amounts (g/10 ares) of chemicals | Damage degree | | | | | |
|---|---|---|---|---|---|---|
| | Bracken | Butterbur | Kudzu | Japanese knotweed | Yabugarashi (*Cayratio japonica*) | Dandelion |
| choline MH, 125 | | | 1 | 0 | 1 | 1 |
| choline MH, 250 | 1 | 2 | 2 | 1 | 2 | 2 |
| choline MH, 500 | 2 | 3 | 3.5 | 2 | 3.5 | 3.5 |
| Asulam Sodium, 125 | | | 3 | 1 | 0 | 2 |
| Asulam Sodium, 250 | 3 | 0.5 | 4 | 2 | 1 | 3 |
| Asulam Sodium, 500 | 5 | 1 | 5 | 3 | 2 | 4.5 |
| Asulam Sodium, 125+choline MH, 125 | | | 4 | 4.5 | 4 | 4 |
| Asulam Sodium, 125+choline MH, 250 | 2 | 3 | 4.5 | 5 | 4 | 4.5 |
| Asulam Sodium, 125+choline MH, 500 | 5 | 4.5 | 5 | 5 | 4.5 | 5 |
| Asulam Sodium, 250+choline MH, 125 | | | 4.5 | 5 | 4.5 | 4.5 |
| Asulam Sodium, 250+choline MH, 250 | 4.5 | 4 | 5 | 5 | 5 | 5 |
| Asulam Sodium, 250+choline MH, 500 | 5 | 5 | 5 | 5 | 5 | 5 |
| Asulam Sodium, 500+choline MH, 125 | | | 5 | 5 | 5 | 5 |
| Asulam Sodium, 500+choline MH, 250 | 5 | 5 | 5 | 5 | 5 | 5 |
| Asulam Sodium, 500+choline MH, 500 | 5 | 5 | 5 | 5 | 5 | 5 |

Note
The grass heights of weeds at the time of the treatment were as follows:
Bracken: 70 cm    Butterbur: 70 cm    Arrowroot: 40 cm
Knotweed: 70 cm    Sorrel vine: 65 cm    Dandelion: 25 cm

0 134 339

Test 6

Asulam Sodium and choline MH were sprayed singly or in combination, as indicated in Table 6, together with water in an amount of 10 l per a at the end of May to stems and leaves of hedge bindweed, yellow flower sorrel and quack grass which had been transplanted into a concrete pot (bottomless) in the last autumn. The examination was made at the end of August, and the controlling effect was evaluated according to the following rating. The obtained results are shown in Table 6.

```
  0: harmless to weeds and healthy growth of weeds
0.5: 10 % of weeds withered
  1: 20 % of weeds withered
1.5: 30 % of weeds withered
  2: 40 % of weeds withered
2.5: 50 % of weeds withered
  3: 60 % of weeds withered
3.5: 70 % of weeds withered
  4: 80 % of weeds withered
4.5: 90 % of weeds withered
  5: weeds completely withered
```

TABLE 6

| Amounts (g/10 ares) of chemicals | Damage degree | | |
|---|---|---|---|
| | Hedge bindweed | Yellow flower sorrel | Quack grass |
| choline MH, 125 | 1.5 | 1 | 2 |
| choline MH, 250 | 2 | 1.5 | 2.5 |
| choline MH, 500 | 3.5 | 3 | 5 |
| Asulam Sodium, 62.5 | 3 | 1.5 | 2 |
| Asulam Sodium, 125 | 5 | 1.5 | 3 |
| Asulam Sodium, 250 | 5 | 3 | 5 |
| Asulam Sodium, 62.5+choline MH, 125 | 4.5 | 2.5 | 4 |
| Asulam Sodium, 62.5+choline MH, 250 | 5 | 3 | 5 |
| Asulam Sodium, 62.5+choline MH, 500 | 5 | 4.5 | 5 |
| Asulam Sodium, 125+choline MH, 125 | 5 | 4 | 5 |
| Asulam Sodium, 125+choline MH, 250 | 5 | 4.5 | 5 |
| Asulam Sodium, 125+choline MH, 500 | 5 | 5 | 5 |
| Asulam Sodium, 250+choline MH, 125 | 5 | 4.5 | 5 |
| Asulam Sodium, 250+choline MH, 250 | 5 | 5 | 5 |
| Asulam Sodium, 250+choline MH, 500 | 5 | 5 | 5 |

Note

The grass heights of weeds at the time of the treatment were as follows:
hedge bindweed: 30 cm
violet wood-sorrel: 15 cm
quack grass: 30 cm

Test 7

Test areas were formed in a field where fingergrass, philadelphia fleabane, needle-grass, clover and jishibari (*Ixeris debilis*) grew thick, and at the end of May, Asulam Sodium and choline MH were sprayed singly or in combination, as indicated in Table 7, together with water in an amount of 10 l per a. The investigation was made at the end of August, and the controlling effect was evaluated according to the following rating. The obtained results are shown in Table 7.

0: harmless to weeds and healthy growth of weeds
0.5: 10 % of weeds withered
1: 20 % of weeds withered
1.5: 30 % of weeds withered
2: 40 % of weeds withered
2.5: 50 % of weeds withered
3: 60 % of weeds withered
3.5: 70 % of weeds withered
4: 80 % of weeds withered
4.5: 90 % of weeds withered
5: weeds completely withered

0 134 339

TABLE 7

Damage degree

| Amounts (g/10 ares) of chemicals | Finger-grass | Philadelphia fleabane | Needle-grass | Clover | Jishibari (*Ixeris debilis*) |
|---|---|---|---|---|---|
| choline MH, 125 | 1 | 1 | 0 | 1 | 1 |
| choline MH, 250 | 2 | 2 | 1 | 1.5 | 2 |
| choline MH, 500 | 4.5 | 2.5 | 2 | 2 | 3 |
| Asulam Sodium, 125 | 1.5 | 1.5 | 0.5 | 0 | 2 |
| Asulam Sodium, 250 | 3 | 3 | 1.5 | 0.5 | 3 |
| Asulam Sodium, 500 | 4.5 | 5 | 2.5 | 2 | 4 |
| Asulam Sodium, 125+choline MH, 125 | 3 | 4 | 3 | 3 | 4 |
| Asulam Sodium, 125+choline MH, 250 | 4.5 | 5 | 4 | 4 | 5 |
| Asulam Sodium, 125+choline MH, 500 | 5 | 5 | 5 | 4.5 | 5 |
| Asulam Sodium, 250+choline MH, 125 | 4.5 | 4.5 | 3 | 4 | 5 |
| Asulam Sodium, 250+choline MH, 250 | 5 | 5 | 4 | 5 | 5 |
| Asulam Sodium, 250+choline MH, 500 | 5 | 5 | 5 | 5 | 5 |
| Asulam Sodium, 500+choline MH, 125 | 4.5 | 5 | 4 | 4.5 | 5 |
| Asulam Sodium, 500+choline MH, 250 | 5 | 5 | 5 | 5 | 5 |
| Asulam Sodium, 500+choline MH, 500 | 5 | 5 | 5 | 5 | 5 |

Note

The grass heights of weeds at the time of the treatments were as follows:
finger-grass: 25 cm, philadelphia fleabane: 50 cm, needle grass: 30 cm, clover: 25 cm, jishibari (*Ixeris debilis*): 15 cm

**Claims**

1. A herbicidal composition comprising as active ingredients sodium N-methoxycarbonylsulfanylamide and maleic hydrazide or a salt thereof.

2. A herbicidal composition according to claim 1, wherein the salt of maleic hydrazide is a choline, ethanolamine, sodium or potassium salt of maleic hydrazide.

3. A herbicidal composition according to claim 1 or 2, which contains 20 to 300 parts by weight of sodium N-methoxycarbonylsulfanylamide and 50 to 500 parts by weight of maleic hydrazide or its salt.

4. A herbicidal composition according to claim 1, 2 or 3, which is in the form of a liquid or powder.

5. A method of destroying weeds in a locus which comprises applying to the locus a herbicidal composition as claimed in any one of claims 1 to 4 in an amount such that the amount of sodium N-methoxycarbonylsulfanylamide is 2 to 30 g per a and the amount of maleic hydrazide or its salt is 5 to 50 g per a as maleic hydrazide.

6. A method according to claim 5 wherein the amount of sodium N-methoxycarbonylsulfanylamide is 5 to 25 g per a and the amount of maleic hydrazide or its salt is 10 to 25 g per a as maleic hydrazide.

**Patentansprüche**

1. Herbizides Mittel, enthaltend Natrium-N-methoxycarbonyl-sulfanylamid und Maleinsäurenhydrazid oder ein Salz davon als Wirkstoffe.

2. Herbizides Mittel nach Anspruch 1, worin das Salz des Maleinsäurehydrazids ein Cholin-, Ethanolamin-, Natrium- oder Kaliumsalz des Maleinsäurehydrazids ist.

3. Herbizides Mittel nach Anspruch 1 oder 2, das 20 bis 300 Gewichtsteile Natrium-N-methoxycarbonylsulfanylamid und 50 bis 500 Gewichtsteile Maleinsäurehydrazid oder dessen Salz enthält.

4. Herbizides Mittel nach Anspruch 1, 2 oder 3, das in Form einer Flüssigkeit oder eines Pulvers vorliegt.

5. Verfahren zur Zerstörung von Unkraut an einem Ort, wobei an dem Ort, ein herbizides Mittel gemäß einem der Ansprüche 1 bis 4 in einer Menge eingesetzt wird, daß die Menge von Natrium-N-methoxycarbonyl-sulfanylamid 2 bis 30 g pro a und die Menge von Maleinsäurehydrazid oder dessen Salz 5 bis 50 g pro a beträgt, bezogen auf Maleinsäurehydrazid.

6. Verfahren nach Anspruch 5, worin die Menge von Natrium N-methoxycarbonyl-sulfanylamid 5 bis 25 g pro a beträgt und die Menge von Maleinsäurehydrazid oder dessen Salz 10 bis 25 g pro a beträgt, bezogen auf Maleinsäurehydrazid.

**Revendications**

1. Composition herbicide comprenant, comme ingrédients actifs, du N-méthoxycarbonylsulfanylamide sodique et de l'hydrazide maléique ou un sel de celui-ci.

2. Composition herbicide selon la revendication 1, dans laquelle le sel d'hydrazide maléique est un sel de choline, éthanolamine, sodium ou potassium d'hydrazide maléique.

3. Composition herbicide selon la revendication 1 ou 2, qui contient 20 à 300 parties en poids de N-méthoxycarbonylsulfanylamide sodique et 50 à 500 parties en poids d'hydrazide maléique ou son sel.

4. Composition herbicide selon la revendication 1, 2 ou 3, qui est sous forme de liquide ou de poudre.

5. Procédé pour détruire des mauvaises herbes dans un lieu, selon lequel on applique sur le lieu une composition herbicide selon l'une des revendications 1 à 4 en quantité telle que la quantité de N-méthoxycarbonylsulfanylamide sodique soit de 2 à 30 g/a et la quantité d'hydrazide maléique, ou son sel, soit de 5 à 50 g/a en tant qu'hydrazide maléique.

6. Procédé selon la revendication 5, selon lequel la quantité de N-méthoxycarbonylsulfanylamide sodique est de 5 à 25 g/a et la quantité d'hydrazide maléique, ou son sel, est de 10 à 25 g/a, en tant qu'hydrazide maléique.